# FASCICULE DE BREVET EUROPEEN

(11) **EP 4 051 521 B1**
(45) Date de publication et mention de la délivrance du brevet: **25.02.2026**
(21) Numéro de dépôt: 20785817.6
(22) Date de dépôt: 21.09.2020
(51) Int. Cl.: B60K 1/00, B60K 11/02, F04D 13/00, F04D 1/00, F04D 13/06, F04D 29/60

(54) **SUPPORT DE POMPE POUR UNE ARCHITECTURE DE VÉHICULE AUTOMOBILE ÉLECTRIQUE OU HYBRIDE**
PUMPENTRÄGER FÜR EINE ELEKTRISCHE ODER HYBRIDE KRAFTFAHRZEUGARCHITEKTUR
PUMP SUPPORT FOR AN ELECTRIC OR HYBRID MOTOR VEHICLE ARCHITECTURE

(30) Priorité: 29.10.2019 FR 1912099
(43) Date de publication de la demande: 07.09.2022
(73) Titulaire: Stellantis Auto SAS, 78300 Poissy (FR)
(72) Inventeur: AIT BAGHDAD, Mouhsine, CASABLANCA, 20520 (MA); EL AKRAA, Mohamed Chafik, CASABLANCA, 20270 (MA)
(74) Mandataire: PSIP
(86) Numéro de dépôt international: PCT/FR2020/051633
(87) Numéro de publication internationale: WO 2021/084171

(56) Documents cités:
- EP-A1- 3 248 821
- CN-A- 108 482 087
- DE-A1- 19 603 958

## Description

La présente invention porte sur un support de pompe pour une architecture de véhicule automobile électrique ou hybride.

De façon connue en soi, les véhicules automobiles hybrides ou électriques comportent un moteur électrique de traction associé à un onduleur relié électriquement à une batterie.

L'onduleur est apte à transformer une tension continue issue de la batterie en une tension alternative appliquée sur les phases du moteur électrique afin que celui-ci puisse fournir une énergie mécanique au véhicule.

Le moteur électrique peut également fonctionner dans un mode générateur de façon à transformer une énergie mécanique en une énergie électrique permettant de recharger la batterie. Ce mode de fonctionnement est notamment mis en œuvre lors d'une phase de freinage récupératif. Dans ce cas, l'onduleur à une fonction de pont redresseur afin de transformer une tension alternative générée par le moteur électrique en une tension continue appliquée aux bornes de la batterie.

Ces éléments d'architecture sont encombrants ce qui rend difficile l'implantation de composants annexes, notamment d'une pompe à eau appartenant à un circuit de refroidissement du moteur électrique.

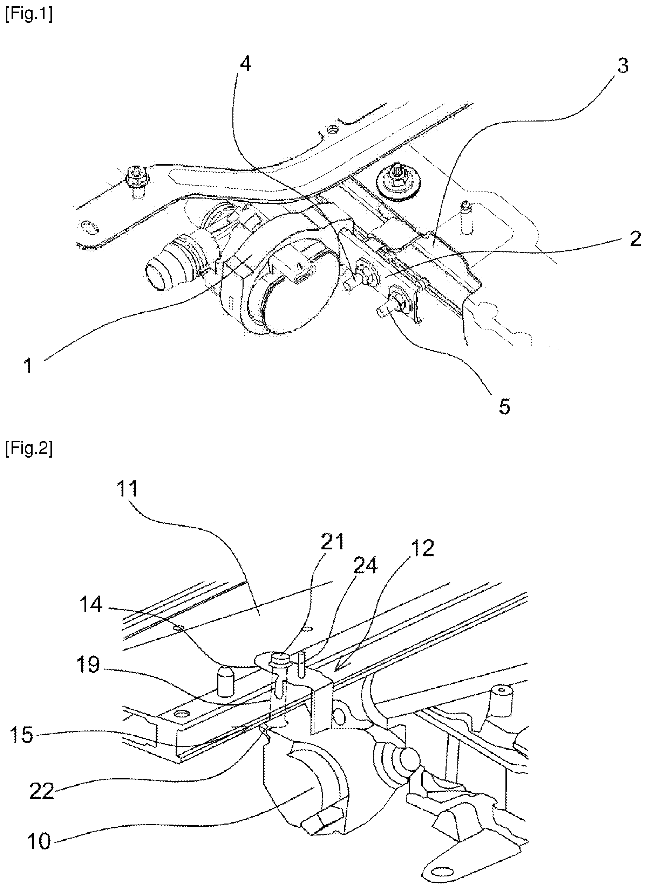

Comme cela est illustré par la figure 1, la pompe à eau 1 peut être montée sur un support 2 fixé sur un élément structurel 3 au moyen de deux organes de fixation 4, 5 disposés suivant un axe longitudinal du véhicule. Toutefois, une telle configuration n'est pas compatible avec les débattements induits par le moteur électrique dans un environnement sous capot à fortes contraintes spatiales d'encombrement.

On connait en outre du document de brevet CN-A-108 482 087 un ensemble conforme au préambule de la revendication 1. On connait également du document de brevet DE-A1-196 03 958 un support à deux bras de fixation.

L'invention vise à remédier efficacement à cet inconvénient en proposant un ensemble pour véhicule automobile comportant:
- un élément structurel,
- une pompe de liquide de refroidissement, et
- un support de pompe sur lequel est fixée la pompe de liquide de refroidissement,
- le support de pompe comportant deux bras de fixation disposés de part et d'autre de l'élément structurel,
- les deux bras de fixation comportant chacun un trou de fixation disposé en regard d'un trou de fixation correspondant ménagé dans l'élément structurel,
- ledit ensemble comportant un organe de fixation inséré dans les trous de fixation des bras de fixation du support de pompe ainsi que dans le trou de fixation de l'élément structurel pour permettre la fixation du support de pompe sur l'élément structurel,
chaque bras de fixation comporte une première portion prolongée par une deuxième portion inclinée formant un angle non nul avec la première portion, et les deuxièmes portions sont reliées entre elles par une portion de liaison présentant ainsi une forme de cuvette de laquelle est issue une portion de fixation destinée à être emmanchée dans une forme correspondante de la pompe de liquide de refroidissement.

L'invention permet ainsi au support de pompe de s'intégrer sans difficulté dans l'environnement du moteur électrique. Le montage de l'ensemble est également facilité du fait de l'utilisation d'un organe de fixation unique. L'invention permet également d'améliorer la tenue mécanique ainsi que la filtration des vibrations du support de pompe.

Selon une réalisation, l'organe de fixation est une vis coopérant avec un écrou solidaire d'un bras de fixation du support de pompe.

Selon une réalisation, le support de pompe présente un mode propre vibratoire supérieur à 250Hz.

Selon une réalisation, la pompe de liquide de refroidissement est emmanchée sur le support de pompe.

Selon une réalisation, le support de pompe comporte un pion de fixation sur lequel est fixée une goulotte pour le passage d'un faisceau de câbles électriques.

Selon une réalisation, l'élément structurel est une traverse du véhicule automobile.

Selon une réalisation, la pompe de liquide de refroidissement est une pompe à eau électrique.

Selon une réalisation, le support de pompe est réalisé dans un matériau métallique, notamment en acier.

L'invention a également pour objet un véhicule automobile comportant un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un ensemble comportant une pompe de liquide de refroidissement fixée sur une traverse par l'intermédiaire d'un support de pompe selon l'état de la technique;
[Fig. 2] La figure 2 est une représentation schématique d'un ensemble comportant une pompe de liquide de refroidissement fixée sur une traverse par l'intermédiaire d'un support de pompe selon la présente invention;
[Fig. 3] La figure 3 est une vue en perspective d'une pompe de liquide de refroidissement montée sur un support de pompe selon la présente invention;
[Fig. 4] La figure 4 est une vue en perspective d'un support de pompe selon la présente invention;
[Fig. 5] La figure 5 est une vue en coupe transversale illustrant l'environnement dans lequel est implanté le support de pompe selon la présente invention;
[Fig. 6] La figure 6 est une vue de dessus illustrant l'environnement dans lequel est implanté le support de pompe selon la présente invention.

Sur les figures 2 à 6, les éléments identiques, similaires, ou analogues conservent les mêmes références d'une figure à l'autre.

La figure 2 montre une pompe de liquide de refroidissement 10 montée sur un élément structurel 11 du véhicule automobile par l'intermédiaire d'un support de pompe 12. La pompe de liquide de refroidissement 10 est fixée sur le support de pompe 12, notamment par emmanchement. En variante, la pompe 10 pourra être fixée par vissage ou collage sur le support de pompe 12 ou toute autre technique de fixation adaptée à l'application.

L'élément structurel 11 est par exemple une traverse du véhicule s'étendant suivant une direction perpendiculaire à une direction longitudinale du véhicule. La traverse 11 est notamment une traverse de groupe électromoteur destinée à porter également un support de batterie et un support de chargeur de batterie.

La pompe de liquide de refroidissement 10 est de préférence une pompe à eau électrique à haute température permettant d'assurer la circulation d'eau dans le circuit de refroidissement d'un moteur électrique de traction du véhicule automobile. La pompe de liquide de refroidissement 10 présente par exemple une puissance de l'ordre de 20 Watts. En variante, la pompe 10 pourra assurer la circulation d'un autre liquide caloporteur, comme par exemple de l'huile, assurant le refroidissement du moteur électrique.

Le support de pompe 12 est réalisé de préférence dans un matériau métallique, notamment en acier.

A cet effet, comme on peut le voir sur les figures 2, 3, et 4, le support de pompe 12 comporte deux bras de fixation 14, 15 disposés de part et d'autre de l'élément structurel 11. Autrement dit, l'élément structurel 11 est pris en sandwich, c'est-à-dire serré, entre les deux bras de fixation 14, 15.

Les deux bras de fixation 14, 15 comportent chacun un trou de fixation 16, 17 disposé en regard d'un trou de fixation 19 correspondant ménagé dans l'élément structurel 11. Suivant un exemple de réalisation, le trou de fixation 19 ménagé dans l'élément structurel 11 est un trou lisse.

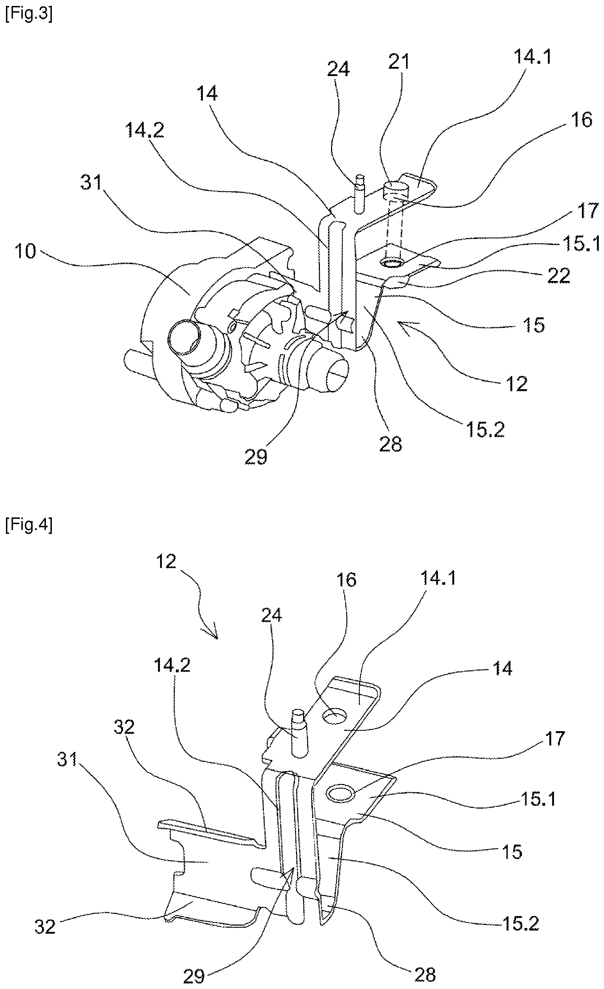

Un organe de fixation 21 représenté schématiquement sur les figures 2 et 3 est inséré dans les trous de fixation 16, 17 des bras 14, 15 du support de pompe 12 ainsi que dans le trou de fixation 19 de l'élément structurel 11. L'organe de fixation 21 permet ainsi la fixation du support de pompe 12 sur l'élément structurel 11.

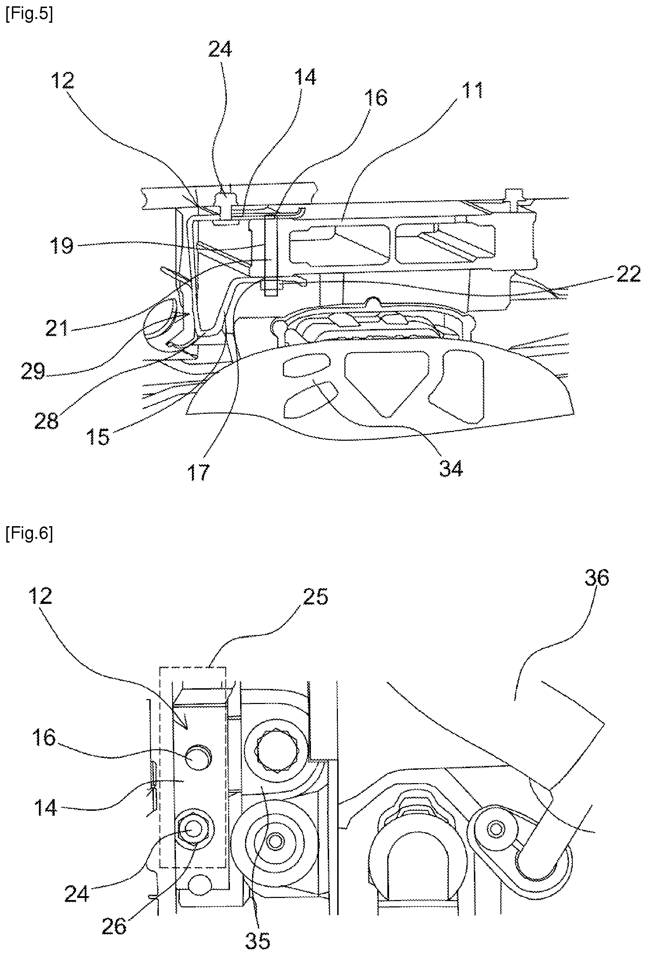

En l'occurrence, l'organe de fixation 21 est une vis coopérant avec un écrou 22 solidaire d'un bras de fixation 15. L'écrou 22 est par exemple soudé sur le bras 15, tel que cela est bien visible sur les figures 3 et 5. Par rapport à la configuration de la figure 1, l'invention présente ainsi l'avantage de nécessiter un organe de fixation 21 unique pour assurer la fixation du support de pompe 12 sur l'élément structurel 11. Cela facilite donc le montage de l'ensemble tout en réduisant sa durée. En variante, l'écrou 22 est rapporté par rapport au support de pompe 12 et n'est pas fixé sur un bras de fixation 14, 15.

Le support de pompe 12 présente avantageusement un mode propre vibratoire supérieur à 250 Hz. On évite ainsi que le support de pompe 12 entre en vibration pour des fréquences inférieures à 250 Hz observables dans son environnement.

Comme on peut le voir sur les figures 2, 3, et 4, le support de pompe 12 pourra également comporter un pion de fixation 24 sur lequel est fixée une goulotte 25 pour le passage d'un faisceau de câbles électriques. A cet effet, le pion de fixation 24 ayant une extrémité filetée est inséré à l'intérieur d'une ouverture traversante ménagée dans la goulotte 25 puis un écrou 26 est vissé sur l'extrémité filetée du pion de fixation 24 pour assurer le maintien de l'ensemble, tel que montré sur la figure 6.

Plus précisément, les bras de fixation 14, 15 du support comportent chacun une première portion 14.1, 15.1 destinée à venir en appui contre une face correspondante de la traverse 11. La portion 14.1 vient ainsi en appui contre une face supérieure de la traverse 11, tandis que la portion 15.1 vient en appui contre une face inférieure de la traverse 11 opposée à la face supérieure.

Les premières portions 14.1 et 15.1 sont espacées entre elles d'une distance correspondant à l'épaisseur de la traverse 11. Il existe une superposition verticale entre les deux portions 14.1, 15.1 munies chacune d'un trou de fixation 16, 17. Les trous de fixations 16, 17 présentent des axes confondus l'un par rapport à l'autre.

Une première portion 14.1 (respectivement 15.1) est prolongée par une deuxième portion inclinée 14.2 (respectivement 15.2) formant un angle non nul avec la première portion 14.1 (respectivement 15.1). Les deuxièmes portions 14.2, 15.2 sont reliées entre elles par une portion de liaison 28. Les deuxièmes portions 14.2, 15.2 et la portion de liaison 28 présentent ainsi une forme de cuvette 29 de laquelle est issue une portion de fixation 31 destinée à être emmanchée dans une forme correspondante de la pompe de liquide de refroidissement 10.

A cet effet, comme on peut le voir sur la figure 4, la portion de fixation 31 comporte deux ailettes 32 repliées par rapport à une partie centrale et destinées à s'insérer dans une forme correspondante d'une portion de la pompe 10 réalisée dans un matériau élastique, notamment en caoutchouc.

Les figures 5 et 6 illustrent l'implantation du support de pompe 12 dans un environnement sous-capot du véhicule automobile. On observe que la forme de cuvette 29 du support 12 s'étend dans un espace entre la traverse 11 et un support 34 de moteur électrique de traction. En outre, le support de pompe 12 est disposé à proximité d'un support de chargeur de batterie de traction 35, tel que cela est montré sur la figure 6. Les éléments 36 correspondent à des éléments de filtration des vibrations adaptés à un support de condenseur.

Lors du montage, un opérateur humain ou un robot pourra aisément prendre le support de pompe 12 et positionner les bras de fixation 14, 15 de sorte que les trous de fixations 16, 17 soient disposés en regard du trou de fixation 19 ménagé dans la traverse 11.

Une vis 21 pourra ensuite être insérée dans le trou 16 du bras 14 puis dans le trou lisse 19 de la traverse 11 puis dans le trou de fixation 17 du bras 15. La vis 21 pourra alors être vissée dans l'écrou 22 coaxial avec le trou 17.

La goulotte 25 pourra être fixée au pion de fixation 24 par insertion dudit pion de fixation 24 à l'intérieur de l'ouverture traversante de la goulotte 25 puis vissage d'un écrou 26 sur l'extrémité filetée du pion de fixation 24 pour assurer le maintien de l'ensemble.

L'invention a également pour objet un véhicule automobile comportant un ensemble tel que précédemment décrit.

## Revendications

1. Ensemble pour véhicule automobile comportant:
- un élément structurel (11),
- une pompe de liquide de refroidissement (10), et
- un support de pompe (12) sur lequel est fixée la pompe de liquide de refroidissement (10),
**caractérisé en ce que** le support de pompe (12) comporte deux bras de fixation (14, 15) disposés de part et d'autre de l'élément structurel (11),
- les deux bras de fixation (14, 15) comportant chacun un trou de fixation (16, 17) disposé en regard d'un trou de fixation (19) correspondant ménagé dans l'élément structurel (11),
- ledit ensemble comportant un organe de fixation (21) inséré dans les trous de fixation (16, 17) des bras de fixation (14, 15) du support de pompe (12) ainsi que dans le trou de fixation (19) de l'élément structurel (11) pour permettre la fixation du support de pompe (12) sur l'élément structurel (11), chaque bras de fixation (14, 15) comportant une première portion (14.1, 15.1) prolongée par une deuxième portion inclinée (14.2, 15.2) formant un angle non nul avec la première portion (14.1, 15.1) et les deuxièmes portions (14.2, 15.2) sont reliées entre elles par une portion de liaison (28) présentant ainsi une forme de cuvette (29) de laquelle est issue une portion de fixation (31) destinée à être emmanchée dans une forme correspondante de la pompe de liquide de refroidissement (10).

2. Ensemble selon la revendication 1, **caractérisé en ce que** l'organe de fixation (21) est une vis coopérant avec un écrou (22) solidaire d'un bras de fixation (15) du support de pompe (12).

3. Ensemble selon la revendication 1 ou 2, **caractérisé en ce que** le support de pompe (12) présente un mode propre vibratoire supérieur à 250Hz.

4. Ensemble selon l'une quelconque des revendications 1 à 3, **caractérisé en ce que** la pompe de liquide de refroidissement (10) est emmanchée sur le support de pompe (12).

5. Ensemble selon l'une quelconque des revendications 1 à 4, **caractérisé en ce que** le support de pompe (12) comporte un pion de fixation (24) sur lequel est fixé une goulotte (25) pour le passage d'un faisceau de câbles électriques.

6. Ensemble selon l'une quelconque des revendications 1 à 5, **caractérisé en ce que** l'élément structurel (11) est une traverse du véhicule automobile.

7. Ensemble selon l'une quelconque des revendications 1 à 6, **caractérisé en ce que** la pompe de liquide de refroidissement (10) est une pompe à eau électrique.

8. Ensemble selon l'une quelconque des revendications 1 à 7, **caractérisé en ce que** le support de pompe (12) est réalisé dans un matériau métallique, notamment en acier.

9. Véhicule automobile comportant un ensemble tel que défini selon l'une quelconque des revendications précédentes.

## Patentansprüche

1. Fahrzeugkombination mit:
- ein Strukturelement (11),
- eine Kühlmittelpumpe (10) und
- einem Pumpenträger (12), an dem die Kühlmittelpumpe (10) befestigt ist,
Der Pumpenträger (12) weist zwei Befestigungsarme (14, 15) auf, die beiderseits des Strukturelements (11) angeordnet sind.
- die beiden Befestigungsarme (14, 15) jeweils eine Befestigungsbohrung (16, 17) aufweisen, die gegenüber einer entsprechenden Befestigungsbohrung (19) im Strukturelement (11) angeordnet ist,
- Die Anordnung umfasst ein Befestigungselement (21), das in die Befestigungslöcher (16, 17) der Befestigungsarme (14, 15) des Pumpenträgers (12) sowie in die Befestigungsbohrung (19) des Strukturelements (11) eingesetzt ist, um die Befestigung des Pumpenträgers (12) am Strukturelement (11) zu ermöglichen, wobei jeder Arm Befestigungselement (14, 15) mit einem ersten Abschnitt (14.1, 15.1), der durch einen zweiten schrägen Abschnitt (14.2, 15.2) verlängert ist, der einen Winkel von nicht null zu dem ersten Abschnitt (14.1, 15.1) bildet, und die zweiten Abschnitte (14.2, 15.2) sind durch einen Verbindungsabschnitt (2) miteinander verbunden Dadurch ist eine Wannenform (29) ausgebildet, aus der ein in eine entsprechende Form der Kühlmittelpumpe (10) aufsteckbarer Befestigungsabschnitt (31) hervorsteht.

2. Anordnung nach Anspruch 1, **dadurch gekennzeichnet, dass** das Befestigungselement (21) eine Schraube ist, die mit einer Mutter (22) zusammenwirkt, die mit einem Befestigungsarm (15) des Pumpenhalters (12) verbunden ist.

3. Anordnung nach Anspruch 1 oder 2, **dadurch gekennzeichnet, dass** der Pumpenträger (12) einen eigenen Vibrationsmodus von mehr als 250 Hz aufweist.

4. Anordnung nach einem der Ansprüche 1 bis 3, **dadurch gekennzeichnet, dass** die Kühlmittelpumpe (10) auf den Pumpenträger (12) aufgesteckt ist.

5. Anordnung nach einem der Ansprüche 1 bis 4, **dadurch gekennzeichnet, dass** der Pumpenträger (12) einen Befestigungszapfen (24) aufweist, an dem eine Rinne (25) für den Durchgang eines elektrischen Kabelbündels befestigt ist.

6. Anordnung nach einem der Ansprüche 1 bis 5, **dadurch gekennzeichnet, dass** das Strukturelement (11) ein Querträger des Kraftfahrzeugs ist.

7. Anordnung nach einem der Ansprüche 1 bis 6, **dadurch gekennzeichnet, dass** die Kühlmittelpumpe (10) eine elektrische Wasserpumpe ist.

8. Anordnung nach einem der Ansprüche 1 bis 7, **dadurch gekennzeichnet, dass** der Pumpenträger (12) aus einem metallischen Material, insbesondere aus Stahl, besteht.

9. Kraftfahrzeug, das eine Anordnung nach einem der vorhergehenden Ansprüche aufweist.

## Claims

1. Motor vehicle set comprising:
- a structural element (11),
- a cooling liquid pump (10), and
- a pump carrier (12) on which the cooling liquid pump (10) is attached,
characterized as the pump support (12) has two attachment arms (14, 15) arranged on both sides of the structural element (11),
- the two attachment arms (14, 15) each with a attachment hole (16, 17) placed next to a corresponding attachment hole (19) housed in the structural element (11),
- the assembly incorporating a fastening device (21) inserted in the fixing holes (16, 17) of the fastening arms (14, 15) of the pump holder (12) and in the fixing hole (19) of the structural element (11) to allow the fixing of the pump holder (12) on the structural element (11), each arm fixing (14, 15) with a first serving (14.1, 15.1) extended by a second sloping serving (14.2, 15.2) forming a non-zero angle with the first serving (14.1, 15.1) and the second serving (14.2, 15.2) are connected to each other by a binding serving (2 8) thus having a shape of a bowl (29) from which is produced a serving of fixation (31) intended to be held in a corresponding shape of the coolant pump (10).

2. Together in accordance with Claim 1, **characterized in that** the fastening device (21) is a screw cooperating with a nut (22) in support of a fastening arm (15) of the pump carrier (12).

3. Together according to claim 1 or 2, **characterized in that** the pump support (12) has a proper vibratory mode exceeding 250Hz.

4. Together according to any of the claims 1 to 3, characterized as the coolant pump (10) is installed on the pump holder (12).

5. Together in accordance with any of the claims 1 to 4, **characterized by** the fact that the pump bracket (12) has a mounting pawn (24) on which a pin (25) is attached for the passage of an electric cable bundle.

6. Together according to any of the claims 1 to 5, **characterized in that** the structural element (11) is a vehicle crossing.

7. Together according to any of the claims 1 to 6, characterized as the coolant pump (10) is an electric water pump.

8. Together according to any of the claims 1 to 7, **characterized by** the fact that the pump support (12) is made of metal material, notably steel.

9. Motor vehicle with a set as defined in any of the previous claims.
